# EUROPÄISCHE PATENTSCHRIFT

(11) **EP 0 617 290 B1**
(45) Veröffentlichungstag und Bekanntmachung des Hinweises auf die Patenterteilung: **14.05.1997**
(21) Anmeldenummer: 94103902.6
(22) Anmeldetag: 14.03.1994
(51) Int. Cl.: G01P 13/00

(54) **Sensorschalter mit einem auf Bewegung reagierenden Sensor**
Switch activated by a movement sensor
Commutateur activé par un capteur de mouvement

(30) Priorität: 20.03.1993 DE 4308983
(43) Veröffentlichungstag der Anmeldung: 28.09.1994
(73) Patentinhaber: ABB PATENT GmbH, D-68309 Mannheim (DE)
(72) Erfinder: Zapp, Robert, D-58579 Schalksmühle (DE); Rosch, Rainer, Dr., D-58515 Lüdenscheid (DE)
(74) Vertreter: Rupprecht, Klaus, Dipl.-Ing.

(56) Entgegenhaltungen:
- WO-A-87/05115
- DE-A- 3 922 218
- US-A- 3 943 712
- US-A- 4 882 567
- US-A- 4 993 049
- PATENT ABSTRACTS OF JAPAN vol. 13, no. 322 (P-902) 20. Juli 1989 & JP-A-10 091 082 (TANIGUCHI SHINICHI) 10. April 1989.

## Beschreibung

Die Erfindung bezieht sich auf einen Sensorschalter mit einem auf Bewegung reagierenden Sensor. Dieser kann beispielsweise dazu verwendet werden, eine Beleuchtung einzuschalten, solange sich eine Person in einem überwachten Erfassungsbereich befindet.

Bekannte Passiv-Infrarot-Bewegungsmelder (vgl. z.B. US-A-4 943 712) nutzen die Bewegung einer Person dazu, ein Einschaltsignal - z.B. für eine Beleuchtung - zu erzeugen. Dieses Einschaltsignal bleibt solange erhalten, wie Bewegung der Person im Erfassungsbereich erkannt wird. Werden keine Bewegungen mehr erkannt, kehrt das Schaltsignal nach einer vorgebbaren Verzögerungszeit in seinen Ausgangszustand (Ausschaltzustand) zurück.

Wenn mit solchen Bewegungsmeldern Licht, z.B. in einem Büro, geschaltet wird, schaltet das Licht wieder aus, wenn keine Bewegung (z.B. bei ruhiger Tätigkeit der Person am Schreibtisch) mehr erkannt wird. In der Praxis wird deshalb üblicherweise eine sehr lange Verzögerungszeit eingestellt, um vorzeitige Ausschaltungen zu verhindern. Aber selbst dann gibt es noch Fälle, in denen das Licht abgeschaltet wird, obwohl der Raum noch besetzt ist. Außerdem wird durch Einstellung einer sehr langen Verzögerungszeit in nachteiliger Weise der Energiespareffekt stark reduziert.

Der Erfindung liegt die Aufgabe zugrunde, einen Sensorschalter mit einem auf Bewegung reagierenden Sensor der eingangs genannten Art anzugeben, der das Vorhandensein einer Person innerhalb eines Erfassungsbereiches zuverlässig erfaßt und permanent überprüft.

Diese Aufgabe wird erfindungsgemäß durch die im Anspruch 1 angegebenen Merkmale gelöst.

Die mit der Erfindung erzielbaren Vorteile liegen insbesondere darin, daß die Wärmestrahlung von Personen zusätzlich zur Bewegung der Person herangezogen wird, um das Vorhandensein einer Person zuverlässig zu erfassen. Der erste Sensor stellt dabei einen "klassischen" Bewegungsmelder dar, der auf Bewegungen einer Person im (relativ großen) ersten Erfassungsbereich reagiert. Der zweite Sensor überprüft die Temperatur in seinem (relativ kleinen) zweiten Erfassungsbereich, der innerhalb des ersten Erfassungsbereiches liegt. Da der zweite Sensor erst bei Auftreten einer Bewegung vom ersten Sensor freigegeben wird, ist die Temperatur zum Zeitpunkt der Freigabe als eingespeicherte Referenz-Temperatur anzusehen. Bewegt sich eine Person in den Erfassungsbereich des zweiten Sensors, wird eine höhere Temperatur erkannt. Dieser Meßwert bleibt solange gültig und wird vom zweiten Sensor erkannt, solange die Person im zweiten Erfassungsbereich bleibt. Für die zuverlässige Personenerfassung ist es demnach nicht erforderlich, daß sich die Person innerhalb des zweiten Erfassungsbereiches bewegt. Erst nachdem die Person den zweiten Erfassungsbereich verlassen hat, wird der zweite Sensor wieder gesperrt.

Vorteilhafte Ausgestaltungen der Erfindung sind in den Unteransprüchen gekennzeichnet.

Die Erfindung wird nachstehend anhand des in der Zeichnung dargestellten Ausführungsbeispiels erläutert. Es zeigen:
- Figur 1: den prinzipiellen Aufbau des Sensorschalters,
- Figur 2: die Erfassungsbereiche der einzelnen Sensoren des Sensorschalters,
- Figur 3: das Impulsdiagramm interessierender Signale.

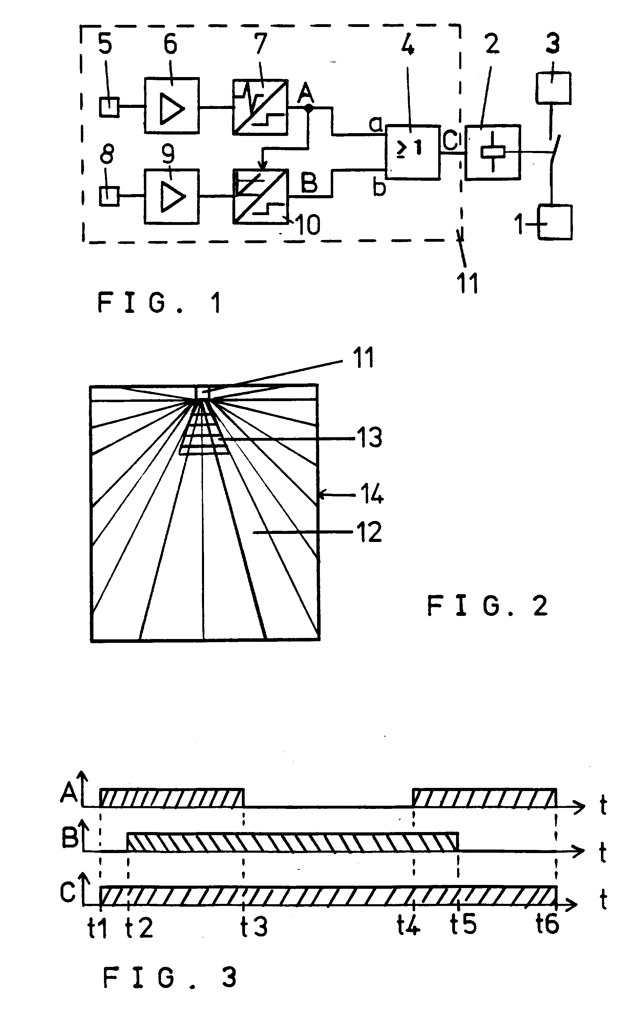

In Figur 1 ist der prinzipielle Aufbau des Sensorschalters dargestellt. Eine Lichtquelle 1 ist über eine Schaltstufe 2 (Relais oder Halbleiterschalter) mit einer Energieversorgungsstufe 3 (z.B. Netz) verbindbar. Die Schaltstufe 2 wird von einem ODER-Gatter 4 angesteuert. Das Ausgangssignal des ODER-Gatters 4 ist mit C bezeichnet.

Der Eingang a des ODER-Gatters 4 ist an den Ausgang einer Auswertestufe 7 angeschlossen, der eingangsseitig das Signal eines auf Bewegungen reagierenden Sensors 5 (Bewegungssensor, Passiv-Infrarot-Sensor) über einen Verstärker 6 zugeleitet wird. Das Ausgangssignal der Auswertestufe 7 ist mit A bezeichnet.

Der Eingang b des ODER-Gatters 4 ist an den Ausgang einer Auswertestufe 10 angeschlossen, der eingangsseitig das Signal eines auf Infrarotstrahlen reagierenden Sensors 8 (Thermosensor, Thermoelement-Sensor, Thermopile-Sensor) über einen Verstärker 9 zugeleitet wird. Das Ausgangssignal der Auswertestufe 10 ist mit B bezeichnet. Als auf Infrarotstrahlen reagierender Sensor 8 kann auch ein Aktiv-Infrarot-Detektor vorgesehen sein, der das reflektierte Licht einer Infrarot-Sendediode auswertet. Das Ausgangssignal A der Auswertestufe 7 wird zusätzlich einem weiteren Eingang (Freigabe-Eingang) der Auswertestufe 10 zugeleitet.

Die aus den Baukomponenten 4 bis 10 bestehende Anordnung ist nachfolgend auch als Sensorschalter 11 bezeichnet.

In Figur 2 sind die Erfassungsbereiche der einzelnen Sensoren des Sensorschalters dargestellt. Der Sensorschalter 11 ist an einer Seitenwand eines Raumes 14 montiert. Es sind der den gesamten Raum 14 umfassende, durch den auf Bewegung reagierende Sensor 5 überwachte erste Erfassungsbereich 12 (= passiv überwachter Bereich) und der kleinere, durch den auf Infrarotstrahlen reagierenden Sensor 8 überwachte zweite Erfassungsbereich 13 (= aktiv oder thermisch überwachter Bereich) zu erkennen. Der zweite Erfassungsbereich 13 liegt stets innerhalb des ersten Erfassungsbereiches 12 und ist stets kleiner als dieser. Der zweite Erfassungsbereich 13 kann auch als innerer Erfassungsbereich bezeichnet werden.

Nachfolgend wird die Funktionsweise des Sensorschalters 11 beschrieben. In Figur 3 ist hierzu das Impulsdiagramm interessierender Signale A, B, C dargestellt. Zum Zeitpunkt t1 betritt eine Person den Raum 14 und tritt damit in den relativ großen ersten Erfassungsbereich 12 ein. Der auf Bewegung reagierende Sensor 5 erkennt die Bewegung, spricht an und folglich weist das Ausgangsignal A der Auswertestufe 7 den logischen Pegel H (High) auf. Das Ausgangssignal A mit Pegel H bewirkt zum einen die sofortige Einschaltung der Lichtquelle 1 - das Ausgangssignal C am ODER-Gatter 4 weist ebenfalls den Pegel H auf - und zum anderen die Einspeicherung des vom auf Infrarotstrahlen reagierenden Sensor 8 momentan erfaßten Temperatursignales als Referenzwert in der Auswertestufe 10 (Freigabe der Auswertestufe 10).

Zum Zeitpunkt t2 tritt die Person in den zweiten Erfassungsbereich 13 ein. Der auf Infrarotstrahlen reagierende Sensor 8 erfaßt die von der Person verursachte Erwärmung, die eine Temperaturerhöhung über den gespeicherten Referenzwert hinaus bewirkt, wodurch die Auswertestufe 10 anspricht und dem ODER-Gatter 4 ein Ausgangssignal B mit Pegel H zuführt.

Zum Zeitpunkt t3 setzt sich die Person innerhalb des zweiten Erfassungsbereiches 13 an einen Schreibtisch. Da der Sensor 5 nunmehr keine Bewegung mehr registriert, fällt das Ausgangssignal A der Auswertestufe 7 auf den Pegel L (Low) ab.

Im sich anschließenden Zeitraum zwischen t3 und t4 arbeitet die Person innerhalb des zweiten Erfassungsbereiches 13 ruhig am Schreibtisch und der Sensor 5 registriert keine Bewegung mehr. Die Lichtquelle 1 bleibt jedoch eingeschaltet, da der Sensor 8 die im Vergleich zum eingespeicherten Referenzwert nach wie vor erhöhte Temperatur im zweiten sungsbereich registriert und das Signal B folglich den Pegel H beibehält. Der Pegel des Signals C beträgt ebenfalls weiterhin H.

Zum Zeitpunkt t4 erhebt sich die Person und bewegt sich vom Schreibtisch fort. Diese Bewegung wird vom Sensor 5 erfaßt und das Signal A nimmt wiederum den Pegel H an.

Zum Zeitpunkt t5 verläßt die Person den zweiten Erfassungsbereich 13, wodurch der Sensor 8 einen Temperaturrückgang im Vergleich zum eingespeicherten Referenzwert registriert und folglich das Signal B auf den Pegel L abfällt.

Zum Zeitpunkt t6 verläßt die Person den Raum 14 und damit den ersten Erfassungsbereich 12, d.h. der Sensor 5 registriert keine Bewegung mehr und das Signal A fällt auf den Pegel L ab. Da nunmehr an keinem der Eingänge a, b des ODER-Gatters 4 ein Signal mit Pegel H ansteht, fällt das Ausgangssignal C ebenfalls auf den Pegel L ab und die Lichtquelle 1 wird abgeschaltet. Mit dem Abfallen des Signals B auf den Pegel L wird die Auswertestufe 10 gesperrt und kann erst wieder durch ein erneutes Signal A mit Pegel H freigegeben werden.

Das Ausgangssignal C kann alternativ für andere Anwendungen direkt weiterverarbeitet oder weitergeleitet werden (z.B. für ein Bussystem).

## Patentansprüche

1. Sensorschalter zum Ein/Ausschalten einer Lichtquelle,
- mit einem auf Bewegung reagierenden ersten Sensor (5) mit einem ersten überwachten Erfassungsbereich (12) und einer ersten Auswertestufe (7),
- mit einem zweiten, auf Infrarotstrahlen reagierenden Sensor (8) mit einem zweiten überwachten Erfassungsbereich (13), der innerhalb des ersten Erfassungsbereiches liegt und kleiner als dieser ist, und mit einer zweiten Auswertestufe (10)
- wobei die erste Auswertestufe (7) so ausgebildet ist, daß bei Eintritt einer Person in den ersten Erfassungsbereich (12) ein Ausgangssignal (A) erzeugt wird, welches über ein ODER-Gatter (4) ein Einschaltsignal für die Lichtquelle erzeugt sowie gleichzeitig die zweite Auswertestufe (10) freigibt, welche so ausgebildet ist, daß die zum Zeitpunkt der Freigabe registrierte Temperatur als Referenztemperatur abgespeichert wird,
- wobei die zweite Auswertestufe (10) so ausgebildet ist, daß die bei Eintritt der Person in den zweiten Erfassungsbereich (13) verursachte Temperaturerhöhung über den gespeicherten Referenzwert ein Ausgangssignal (B) erzeugt, welches über das ODER-Gatter (4) ein Einschaltsignal für die Lichtquelle erzeugt,
- und wobei die Ausgangssignale der ersten bzw. der zweiten Auswertestufe bei fehlender Bewegung bzw. bei Rückgang der registrierten Temperatur auf den eingespeicherten Referenzwert abfallen.

2. Sensorschalter nach Anspruch 1, dadurch gekennzeichnet, daß ein Passiv-Infrarot-Sensor als erster Sensor (5) eingesetzt wird.

3. Sensorschalter nach Anspruch 1 und/oder 2, dadurch gekennzeichnet, daß ein Thermoelement-Sensor als zweiter Sensor (8) eingesetzt wird.

4. Sensorschalter nach Anspruch 1 und/oder 2, dadurch gekennzeichnet, daß ein Thermopile-Sensor als zweiter Sensor (8) eingesetzt wird.

5. Sensorschalter nach einem der Ansprüche 1 bis 4, dadurch gekennzeichnet, daß ein Aktiv-Infrarot-Detektor als zweiter Sensor (8) eingesetzt wird, der das reflektierte Licht einer Infrarot-Sendediode auswertet.

## Claims

1. Sensor switch for switching a light source on/off,
- having a first sensor (5) reacting to movement and having a first monitored detection area (12) and a first evaluation stage (7),
- having a second sensor (8) reacting to infrared rays and having a second monitored detection area (13), which is within the first detection area and is smaller than the latter, and a second evaluation stage (10),
- the first evaluation stage (7) being designed such that, if a person enters the first detection area (12), an output signal A is generated, which produces a switch-on signal for the light source, via an OR gate (4) and simultaneously enables the second evaluation stage (10), which is designed such that the temperature that is registered at the enable time is stored as a reference temperature,
- the second evaluation stage (10) being designed such that the increase in temperature, caused by the person entering the second detection area (13), above the stored reference temperature generates an output signal (B) which, via the OR gate (4) generates a switch-on signal for the light source,
- and the output signals of the first and second evaluation stage, respectively, falling if there is no movement or if the registered temperature returns to the stored reference value.

2. Sensor switch according to Claim 1, characterized in that a passive infrared sensor is employed as first sensor (5).

3. Sensor switch according to Claim 1 and/or 2, characterized in that a thermocouple sensor is used as second sensor (8).

4. Sensor switch according to Claim 1 and/or 2, characterized in that a thermopile sensor is used as second sensor (8).

5. Sensor switch according to one of Claims 1 to 4, characterized in that an active infrared detector, which evaluates the reflected light from an infrared transmitting diode, is employed as second sensor (8).

## Revendications

1. Commutateur à détecteur pour la mise en service/hors service d'une source lumineuse,
- comportant un premier détecteur (5), réagissant à un mouvement, comprenant une première zone de saisie (12) surveillée et un premier étage d'évaluation (7),
- comportant un second détecteur (8) réagissant à des rayonnements infrarouges, comprenant une seconde zone de saisie (13) surveillée qui se situe à l'intérieur de la première zone de saisie et qui est plus petite que celle-ci, et comprenant un second étage d'évaluation (10),
- dans lequel le premier étage d'évaluation (7) est réalisé de façon à ce que, lors de l'entrée d'une personne dans la première zone de saisie (12), il est produit un signal de sortie (A) qui produit par l'intermédiaire d'une porte OU (4) un signal d'enclenchement pour la source lumineuse et qui libère simultanément le second étage d'évaluation (10) qui est réalisé de façon à ce que la température enregistrée au moment de la libération est mémorisée en tant que température de référence,
- dans lequel le second étage d'évaluation (10) est réalisé de façon à ce que l'augmentation de température, au-delà de la valeur de référence mémorisée, provoquée par l'entrée de la personne dans la seconde zone de saisie (13) produit un signal de sortie (B) qui produit par l'intermédiaire de la porte OU (4) un signal d'enclenchement pour la source lumineuse,
- et dans lequel les signaux de sortie des premier et second étages d'évaluation tombent lors de l'absence de mouvement et lors d'un retour de la température enregistrée à la valeur de référence mémorisée.

2. Commutateur à détecteur suivant la revendication 1, caractérisé en ce qu'un détecteur passif à infrarouge est mis en oeuvre en tant que premier détecteur (5).

3. Commutateur à détecteur suivant la revendication 1 ou 2, caractérisé en ce qu'un détecteur à élément thermique est mis en oeuvre en tant que second détecteur (8).

4. Commutateur à détecteur suivant la revendication 1 ou 2, caractérisé en ce qu'un détecteur à pile thermoélectrique est mis en oeuvre en tant que second détecteur (8).

5. Commutateur à détecteur suivant l'une des revendications 1 à 4, caractérisé en ce qu'il est mis en oeuvre en tant que second détecteur (8) un détecteur actif à infrarouge qui évalue la lumière réfléchie d'une diode émettrice à infrarouge.
